# EUROPÄISCHE PATENTSCHRIFT

(11) **EP 2 553 243 B1**
(45) Veröffentlichungstag und Bekanntmachung des Hinweises auf die Patenterteilung: **05.08.2015**
(21) Anmeldenummer: 11711535.2
(22) Anmeldetag: 28.03.2011
(51) Int. Cl.: F02B 77/04, F02B 69/04, F01M 9/02, F02D 19/02, F02D 19/08, F02M 25/00, F01N 3/36

(54) **VERFAHREN ZUM EMISSIONSMINDERN VON VERBRENNUNGSKRAFTMASCHINEN UND VERBRENNUNGSKRAFTMASCHINE**
METHOD FOR REDUCING THE EMISSIONS OF INTERNAL COMBUSTION ENGINES, AND INTERNAL COMBUSTION ENGINE
PROCÉDÉ POUR RÉDUIRE LES ÉMISSIONS DE MOTEURS À COMBUSTION INTERNE ET MOTEUR À COMBUSTION INTERNE

(30) Priorität: 29.03.2010 DE 102010003382
(43) Veröffentlichungstag der Anmeldung: 06.02.2013
(73) Patentinhaber: FaktorPlus Green Technology GmbH, 29225 Celle (DE)
(72) Erfinder: NOLTE, Günter, 29227 Celle (DE); SCHENK, Florian, 29227 Celle (DE)
(74) Vertreter: Hoffmann Eitle
(86) Internationale Anmeldenummer: PCT/EP2011/054754
(87) Internationale Veröffentlichungsnummer: WO 2011/120935

(56) Entgegenhaltungen:
- EP-A1- 2 088 306
- EP-A2- 2 014 902
- WO-A1-99/04145
- WO-A1-02/090743
- WO-A1-2009/101715
- DE-A1- 4 326 778
- DE-A1-102007 021 827
- JP-A- 2002 339 772
- US-A- 4 346 689
- US-A- 4 662 327
- US-A1- 2009 320 789

## Beschreibung

### Technisches Gebiet

Die vorliegende Erfindung bezieht sich auf ein Verfahren zum Emissionsmindern von Verbrennungskraftmaschinen, bevorzugt von Verbrennungskraftmaschinen, die mit flüssigem oder gasförmigem Kraftstoff betrieben werden und eine Verbrennungskraftmaschine.

Der weltweite Energiebedarf von Industrie, Gewerbe und Haushalten verzeichnet einen steigenden Trend. Gleichzeitig nehmen die Vorräte an nicht-erneuerbaren Energieträgern, wie zum Beispiel Öl, Erdgas und Kohle ab. Ferner treten zunehmend Umweltauswirkungen durch den Ausstoß von Emissionen, der durch die Verbrennung von fossilen Rohstoffen bedingt ist, auf. Es werden daher immer neue Ansätze entwickelt, bereits bestehende Technologien zur Energieerzeugung in ihrem Schadstoffausstoß und Wirkungsgrad zu verbessern, bzw. neue Verfahren zur Energieerzeugung zu entwickeln.

Zur Energieerzeugung kommen in der Energiewirtschaft zunehmend dezentrale Systeme zur Energieerzeugung zum Einsatz. Diese dezentralen Systeme werden vorrangig aus wirtschaftlichen Gründen gewählt. Als Energielieferant zur Energieerzeugung dienen hierbei größtenteils fossile Brennstoffe, wie zum Beispiel Dieselöl oder Erdgas. Zunehmend werden auch Biotreibstoffe verwendet, spielen aber in der Gesamtenergiebilanz noch eine untergeordnete Rolle. Alternative Energiekonzepte, wie zum Beispiel Windenergie, Wasserkraft oder Solartechnologie haben Nachteile in der zeitlichen Verfügbarkeit und in der Wirtschaftlichkeit.

Derzeit, wo neue Energietechnologien, wie zum Beispiel auch die Nutzung von Wasserstoff als Energieträger, noch nicht in ausreichendem Masse zur Verfügung stehen, steht die Industrie vor massiven politischen und wirtschaftlichen Problemen. Bei hohem Kostendruck und sich verschärfenden Umweltvorschriften ist es derzeit schwierig, Altanlagen zur Energieerzeugung weiter zu betreiben. Altanlagen werden daher oft stillgelegt oder im Teillastbetrieb verwendet.

### Stand der Technik

Aus den genannten Gründen gibt es verschiedene Ansätze, Verbrennungskraftmaschinen in ihrem Wirkungsgrad und den Schadstoffemissionen zu optimieren. So werden unter anderem Gase wie Methan oder auch Wasserstoff der Verbrennungskraftmaschine zusätzlich zum Kraftstoff zugeführt, um die Verbrennung zu optimieren. Die US 2009/0320789 A1 beschreibt einen Verbrennungsmotor mit einem Kraftstoffzuführsystem, bei dem sowohl Biodiesel als auch Propan und Wasserstoff aus separaten oder teilweise auch zusammengefassten Tanks dem Verbrennungsprozess zugeführt werden. Die WO 2009/101715 A1 beschreibt eine Verbrennungskraftmaschine, bei der im Kraftstoffzuführungssystem Wasserstoff eingeblasen wird. Der eingeblasene Wasserstoff kann die Konzentration schädlicher Stickoxide reduzieren.

Darüber hinaus kommen in Verbrennungskraftmaschinen häufig Kraftstofffilter zum Einsatz. Kraftstofffilter können im Kraftstoff frei bewegliche Partikel gefangen halten und somit den Kraftstoff reinigen. Um die Funktion von Kraftstofffiltern sicherzustellen müssen Kraftstofffilter regelmäßig gewartet, z. B. ausgetauscht werden.

Die bestehenden Ansätze konzentrieren sich sämtlich darauf, durch Additive oder Einstellung der Verbrennungsbedingungen den Verbrennungsprozess von Verbrennungskraftmaschinen zu verbessern. Diese Ansätze werden vor allem älteren Systemen nicht gerecht, bei denen es auch darauf ankommt, neben der chemischen und physikalischen Optimierung des Verbrennungsprozesses die Verbrennungskraftmaschinen in der Weise zu optimieren, dass in einem vollautomatischen Reinigungszyklus mittels einer Reinigungsflüssigkeit Verbrennungsrückstände im System entfernt und die Reibung zwischen den bewegten Teilen gesenkt wird. Hier bietet sich jedoch bei älteren Systemen ein Optimierungspotenzial, da die Grenzflächen oft nicht mehr die optimale Oberflächenbeschaffenheit aufweisen oder durch Rückstände verschmutzt sind und dadurch eine erhöhte Reibung zwischen den Komponenten auftritt. Eine Verbesserung der Reibungsverhältnisse in solchen älteren Verbrennungskraftmaschinen kann deren wirtschaftlichen Weiterbetrieb manchmal ermöglichen. Insbesondere durch Kombination der Verfahrensschritte wird das Optimierungspotential zur Emissionsminderung deutlich und ältere Systeme und Anlagen konkurrenzfähig.

Ferner offenbart die WO 02/090743 A1 eine Kraftstoffzufuhr für einen Verbrennungsmotor mit einer ersten Fluidbrennstoffquelle und einer zweiten Fluidbrennstoffquelle. Die beiden Brennstoffe werden in Übereinstimmung mit gemessenen Betriebsparametern miteinander gemischt, und das Gemisch wird dem Verbrennungsmotor zugeführt.

### Darstellung der Erfindung

Es ist daher Aufgabe der vorliegenden Erfindung, ein Verfahren zur Emissionsminderung von Verbrennungskraftmaschinen zur Verfügung zu stellen, das es ermöglicht, bei geringem Umrüstaufwand die Emissionen und den Verbrauch von bestehenden Verbrennungskraftmaschinen zu senken. Ferner ist es eine Aufgabe der vorliegenden Erfindung, eine Verbrennungskraftmaschine zur Verfügung zu stellen, die in ihren Emissionen minimiert ist.

Erfindungsgemäss wird diese Aufgabe durch ein Verfahren und eine Verbrennungskraftmaschine mit den Merkmalen der unabhängigen Patentansprüche gelöst. In den Unteransprüchen finden sich vorteilhafte Ausgestaltungen und Verbesserungen der Erfindung.

Je nach Motortechnologie kommt das erfindungsgemässe Verfahren angepasst zum Einsatz.

Für den Einsatz bei Verbrennungskraftmaschinen, die mit flüssigem Kraftstoff betrieben sind, weist das erfindungsgemässe Verfahren zur Emissionsminderung die folgenden Verfahrensschritte auf:
(E1) Reinigen
(E2) Kraftstoffkonditionieren
(E3) Reibungsmindern
(E4) Gaseinspeisen in das Verbrennungssystem der Verbrennungskraftmaschine

Für den Einsatz bei Verbrennungskraftmaschinen, die mit gasförmigem Kraftstoff betrieben sind, weist das erfindungsgemäße Verfahren zur Emissionsminderung die folgenden Verfahrensschritte auf:
(E3) Reibungsmindern
(E4) Gaseinspeisen in das Verbrennungssystem der Verbrennungskraftmaschine

Im erfindungsgemäßen Verfahrensschritt E1 wird das Kraftstoffsystem, das heißt die Kraftstoffleitungen, das Einspritzsystem und die Verbrennungsräume der Verbrennungskraftmaschine von Schmutz und Ablagerungen gereinigt. Dadurch wird die Verbrennung und Kraftstoffzuführung optimiert und die Verbrennungskraftmaschine erhält eine höhere Leistungsfähigkeit zurück. Ferner werden die Abgasemissionen, insbesondere die Russ- bzw. Feinstaubemissionen reduziert. Erfindungsgemäß kann somit die Verbrennungskraftmaschine ohne aufwändige Instandsetzungsarbeiten gereinigt werden. Das im Verfahrensschritt E1 eingesetzte Reinigungsmittel ist besonders bevorzugt ein komplexes Kohlenwasserstoffgemisch, das eine Kombination von paraffinischen, cycloparaffinischen, aromatischen und olefinischen Kohlenwasserstoffen beinhaltet. Die Anwendung erfolgt über den für den Verfahrensschritt E1 vorgesehenen Reinigungsmitteleinspeiser.

Erfindungsgemäß wird in einem weiteren Verfahrensschritt E2 der Kraftstoff konditioniert. Dabei wird das sich im Kraftstoff bzw. Tanksystem befindende Wasser gebunden, bevorzugt emulgiert und ausgetragen. Durch die Konditionierung wird der Bildung von Bakterien im Kraftstofftank entgegengewirkt, ohne dass ein Biozid eingesetzt werden muss. Dadurch entstehen, im Gegensatz zum Einsatz von Bioziden, keine Ablagerungen, welche das Kraftstoffsystem verschmutzen oder verstopfen können. Im Verfahrensschritt E2 wird bevorzugt ein Kraftstoffkonditionierer, der eine Mischung von Kohlenwasserstoffen, welche aus paraffinischen, cycloparaffinischen, aromatischen und olefinischen Kohlenwasserstoffen bestehen, eingesetzt. Besonders bevorzugt weist der Kraftstoffkonditionierer auch eine Mischung verschiedener Ethylenglycol- und Paraldehydkomponenten auf. Der Kraftstoffkonditionierer wird in einer bevorzugten Konzentration von 1:4000 (1 Anteil Kraftstoffkonditionierer auf 4000 Anteile Kraftstoff) angewendet. Bevorzugt kommen bei der Konditionierung hochaktive Wirkstoffe zum Einsatz, die die Fließfähigkeit und Verbrennung des Kraftstoffes verbessern. Durch die Reduzierung des Wassers im Kraftstoffsystem wird dieses wirksam gegen Korrosion geschützt. Insgesamt werden durch die Konditionierung die Abgasemissionen, insbesondere von Russ bzw. Feinstaub, von Stickoxiden und von Kohlendioxid reduziert. Es ergibt sich ferner ein Einsparvolumen von bis zu 8 bis 10 Prozent Kraftstoff.

Im Verfahrensschritt E3 eines Reibungsminderns wird besonders bevorzugt dem Verbrennungskraftmaschinenöl, bevorzugt dem Getriebeöl oder dem Differentialöl oder einer Auswahl davon ein Reibungsminderer zugesetzt. Der eingesetzte Reibungsminderer besteht bevorzugt aus einem Gemisch verschiedener Stoffe und beinhaltet besonders bevorzugt Siliziumoxid. Die Wirkstoffe im Reibungsminderer liegen bevorzugt in nano-strukturierter Form vor und weisen im Vergleich zu den Grundbestandteilen von Schmierölen andere physikalische und nur den Nanosubstraten eigene Wirkmechanismen auf. Demzufolge sind die bevorzugt verwendeten Nanosubtrate eigenständig und nutzen das sie umgebende Schmiermittel als Trägermedium, um an die eigentlichen Reaktionsoberflächen (Reibungszentren) zu gelangen. Der Verfahrensschritt einer Reibungsminderung wirkt dadurch direkt reibungsmindernd an den Reibungszentren der Verbrennungskraftmaschine, des Getriebes oder des Differentials. Auf den ölführenden Reibungsflächen werden dabei reibungsreduzierende hochwirksame Verschleißschutzschichten ausgebildet. Solche Verschleißschutzschichten werden auch auf den Zylinderlaufflächen der Verbrennungskraftmaschine gebildet. Dadurch wird sekundär der Verbrennungsprozess positiv beeinflusst und es kommt zu einer weiteren Wirkungsgradsteigerung des Verbrennungskraftmaschine. Nicht vollständig ausgetragene, gasförmige Verbrennungsrückstände gelangen nicht mehr in das Verbrennungskraftmaschinenöl. Dadurch wird der Versäuerung des Verbrennungskraftmaschinenöls wirksam entgegengewirkt. Insgesamt kann mit diesem Verfahrensschritt eine Verschleißschutzschicht gebildet werden, die bis über 200.000 km Laufleistung einer Kraftfahrzeugverbrennungskraftmaschine wirkt, die Lebensdauer der Verbrennungskraftmaschine erhöht und deren Wartungsaufwand verringert. Ferner bleibt das Verbrennungskraftmaschinenöl länger gebrauchsfähig. Durch die Reibungsreduzierung wird weniger Energie und dadurch auch weniger Kraftstoff benötigt. Die Folge ist auch eine Verminderung der Abgasemissionen, insbesondere von Kohlendioxid.

Im erfindungsgemäßen Verfahrensschritt E4 wird ein Gaseinspeisen in das Verbrennungssystem der Verbrennungskraftmaschine durchgeführt. Bei Anwendung an einer turboaufgelädenen Verbrennungskraftmaschine wird die Menge des zugeführten Gases bevorzugt in Abhängigkeit vom Verdichtungsdruck des Turboladers gesteuert. Bei Verbrennungskraftmaschinen mit flüssigem Kraftstoff kann bevorzugt LPG (Liquified Pressure Gas, Flüssiggas) und CNG (Compressed Natural Gas, Erdgas) verwendet werden. Bevorzugt wird Wasserstoff als Gas dem Verbrennungssystem der Verbrennungskraftmaschine zugeführt. Dieser Verfahrensschritt bietet die vorteilhafte Wirkung, dass bei gleicher Verbrennungskraftmaschinenleistung weniger Kraftstoff als im Mono-Kraftstoffbetrieb (ohne die erfindungsgemäße Gaseinspeisung) verbraucht wird. Ferner reduziert sich im Abgas bei zum Beispiel einem Kraftstoffverhältnis von 70 Prozent flüssigem Kraftstoff zu 30 Prozent gasförmigem Kraftstoff der Kohlenstoffdioxidanteil im Abgas um ca. 20 Prozent, der Stickoxidanteil um ca. 30 Prozent und der Russ- bzw. Feinstaubanteil um ca. 80 Prozent. Bei Verwendung von Wasserstoff als Gas wird die Abgasbilanz noch zusätzlich verbessert.

Gemäß einer bevorzugten Auführungsform der vorliegenden Erfindung sind im Verfahrensschritt des Reinigens die Teilverfahrensschritte Durchführen eines Arbeitsprozesses zum zerstörungsfreien vollautomatischen Reinigen der Verbrennungskraftmaschine unter Zuführung einer Reinigungsflüssigkeit in die Verbrennungskraftmaschine und Wechseln der Kraftstofffilter, die zum Reinigen des Kraftstoffsystems der Verbrennungskraftmaschine dienen, vorgesehen. Die Reinigungsflüssigkeit trägt dabei die Verunreinigungen aus der Verbrennungskraftmaschine aus, die sich anschließend teilweise in den Kraftstofffiltern ablagern. Daher ist es vorteilhaft am Ende des Reinigungsschrittes die Kraftstofffilter zu wechseln, um deren volle Filterkapazität wieder bereit zu stellen.

Gemäß einer bevorzugten Weiterbildung der vorliegenden Erfindung ist in einem Verfahrensschritt E5 ein Einspeisen von Gas oder einem Gasgemisch in das Abgassystem der Verbrennungskraftmaschine vorgesehen. Dabei wird bevorzugt Wasserstoff in das Abgassystem bevorzugt vor dem Eintritt der Abgase in den Katalysator eingebracht. Bevorzugt kann die Menge des in das Abgas eingebrachten Gases je nach Leistung der Verbrennungskraftmaschine eingestellt werden. Durch eine im Gas/Abgas-Gemisch auftretende chemische Reaktion werden beispielsweise die Stickstoffoxidemissionen durch Umwandlung zu elementarem Stickstoff um bis zu 80 % reduziert.

Bevorzugt wird das Einspeisen von Gas in das Verbrennungssystem der Verbrennungskraftmaschine und/oder das Gaseinspeisen in das Abgassystem in Abhängigkeit von wenigstens einem Emissionswert, besonders bevorzugt einem Stickstoffoxidgehaltwert oder einem Feinstaubgehaltwert, Formaldehydgehaltwert, Kohlenstoffdioxidgehaltwert, Kohlenstoffmonoxidgehaltwert oder einer Kombination davon im Abgas im Abgassystem der Verbrennungskraftmaschine gesteuert. Dazu wird der Emissionswert, bevorzugt der Stickoxidgehalt im Abgas bevorzugt vor dem Eintritt des Abgases in den Katalysator mit einem geeigneten Sensor gemessen.

Gemäß einer bevorzugten Ausführungsform der vorliegenden Erfindung wird das Gaseinspeisen in das Abgassystem mengenmäßig und/oder im Hinblick auf die Gaszusammensetzung in Abhängigkeit von der im Verfahrensschritt Gaseinspeisen in das Verbrennungssystem der Verbrennungskraftmaschine zugeführten Gasmenge gesteuert. Die Emissionsminderung im Abgas wird durch das Gaseinspeisen in das Verbrennungssystem der Verbrennungskraftmaschine und in das Abgas beeinflusst. Das Gaseinspeisen in das Abgas kann dabei optimal eingestellt werden, wenn als eine Eingangsgröße zur Steuerung dieses Verfahrensschrittes die Gasmenge verwendet wird, die dem Verbrennungssystem der Verbrennungskraftmaschine zugeführt wird. Die Erfassung dieser Gasmenge ist technisch einfach und kann zusätzlich oder sogar anstelle der sensortechnischen Erfassung von Emissionswerten im Abgas durchgeführt werden.

Eine erfindungsgemäße Verbrennungskraftmaschine weist einen Verbrennungsmotor und ein Kraftstoffsystem zum Speichern von Kraftstoff und zum Zuführen von Kraftstoff zum Verbrennungsmotor, ein Abgassystem, ein Gaseinspeisungssystem, das eingerichtet ist, Gas in das Verbrennungssystem der Verbrennungskraftmaschine einzuspeisen und ein Gaseinspeisungssystem, das eingerichtet ist, Gas in das Abgassystem der Verbrennungskraftmaschine einzuspeisen, auf. Durch die Möglichkeit gleichzeitig ein Gas in das Verbrennungssystem der Verbrennungskraftmaschine und abgestimmt damit ein weiteres Gas in das Abgassystem der Verbrennungskraftmaschine einzuspeisen ergibt sich ein besonderes Potenzial im Hinblick auf eine Minimierung der Schadstoffemissionen und des Verbrauchs der Verbrennungskraftmaschine.

Gemäß einer bevorzugten Ausführungsform der vorliegenden Erfindung sind das Gaseinspeisungssystem zum Gaseinspeisen in das Verbrennungssystem der Verbrennungskraftmaschine und das Gaseinspeisungssystem zum Gaseinspeisen in das Abgas der Verbrennungskraftmaschine steuerungstechnisch miteinander gekoppelt. Durch diesen Aufbau kann der sensortechnische Aufwand zum Ermitteln der Abgaswerte als Eingangswert für das Gaseinspeisen in das Abgas reduziert werden. Wenn das Systemverhalten einmal festgestellt und abgebildet ist, kann damit eine besonders einfache und wenig fehleranfällige Steuerung der Gaszuführung realisiert werden.

Gemäß einer bevorzugten Ausführungsform der vorliegenden Erfindung sind das Gaseinspeisungssystem zum Gaseinspeisen in das Verbrennungssystem der Verbrennungskraftmaschine und das Gaseinspeisungssystem zum Gaseinspeisen in das Abgas mit unterschiedlichen Gasen bzw. Gaszusammensetzungen befüllt. Dadurch das Verwenden von spezifisch an den Einsatzzweck angepassten Gasen bzw. Gasgemischen kann eine optimale Verbrennung im Motor bzw. Reaktion im Abgas stattfinden.

### Kurze Beschreibung der Zeichnungen

Die Erfindung wird im Folgenden anhand von Ausführungsbeispielen unter Bezugnahme auf die beiliegenden Figuren der Zeichnung näher erläutert.

Von den Figuren zeigen:
- Fig. 1: ist eine schematische Darstellung der technologischen Funktionalität des erfindungsgemäßen Verfahrens bei Verbrennungskraftmaschinen, die mit flüssigem Kraftstoff betrieben werden;
- Fig. 2: ist eine schematische Darstellung der technologischen Funktionalität des erfindungsgemäßen Verfahrens bei Verbrennungskraftmaschinen, die mit gasförmigem Kraftstoff betrieben werden;
- Fig. 3: ist ein Ablaufschema des erfindungsgemäßen Verfahrens bei Verbrennungskraftmaschinen, die mit flüssigem Kraftstoff betrieben werden;
- Fig. 4: ist ein Ablaufschema des erfindungsgemäßen Verfahrens bei Verbrennungskraftmaschinen, die mit gasförmigem Kraftstoff betrieben werden;
- Fig. 5: ist eine schematische Darstellung der Kraftstoffversorgung einer Verbrennungskraftmaschine ohne und mit Anwendung des erfindungsgemäßen Verfahrensschritts E1 des Reinigens;
- Fig. 6: ist eine schematische Darstellung des Verfahrensschrittes E4 von einem Gaseinspeisen in das Verbrennungssystem E0.3 mittels des Gaseinspeisers DG und von dem Verfahrensschritt E5 einem Gaseinspeisen in das Abgassystem E0.5 der Verbrennungskraftmaschine E0 mittels des Gaseinspeisers A bei Verwendung von flüssigem Kraftstoff; und
- Fig. 7: ist eine schematische Darstellung des Verfahrensschritts E4 einer Gaseinspeisung bei Verwendung von gasförmigem Kraftstoff.

In den Figuren bezeichnen dieselben Bezugszeichen gleiche oder funktionsgleiche Komponenten, soweit nichts Gegenteiliges angegeben ist.

### Ausführliche Beschreibung von bevorzugten Ausführungsformen

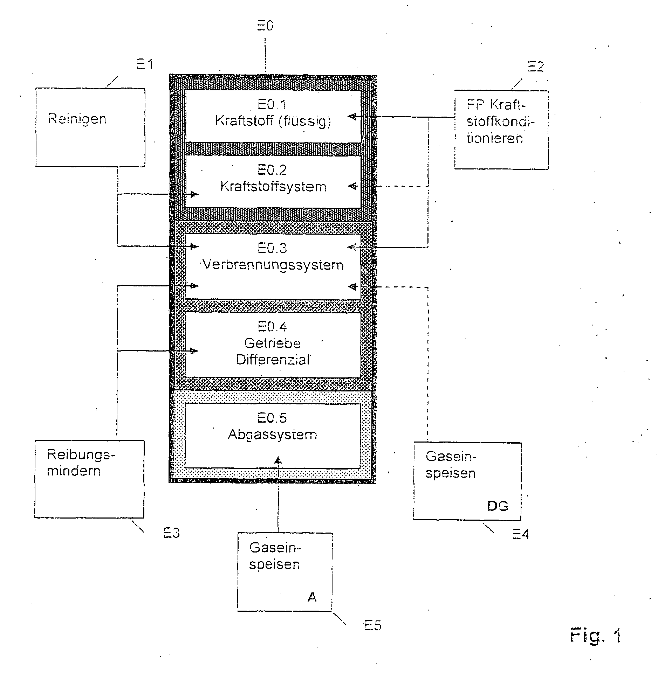

Fig. 1 ist eine schematische Darstellung der technologischen Funktionalität des erfindungsgemäßen Verfahrens bei Verbrennungskraftmaschinen E0, die mit flüssigem Kraftstoff betrieben werden. In Fig. 1 ist insbesondere dargestellt, wie die einzelnen Verfahrensschritte E1 bis E5 auf die als E0 vereinfacht dargestellte Verbrennungskraftmaschine, die flüssigen Kraftstoff verwendet, einwirken. Die Verfahrensschritte E1, nämlich das Reinigen, E2, nämlich das Kraftstoffkonditionieren, E3, nämlich das Reibungsmindern, E4, nämlich das Gaseinspeisen in das Verbrennungssystem E0.3 der Verbrennungskraftmaschine E0 und E5, nämlich das Gaseinspeisen in das Abgassystem E0.5 der Verbrennungskraftmaschine E0 sind als Rechtecke um die ebenfalls als Rechteck dargestellte Verbrennungskraftmaschine E0 dargestellt. Die Wirkzusammenhänge sind im Diagramm jeweils durch Pfeile angegeben. Das als E1 dargestellte Reinigen wirkt dabei auf das Kraftstoffsystem E0.2 und gleichzeitig auf das Verbrennungssystem E0.3 der Verbrennungskraftmaschine E0 ein. Das Reinigen E1 kommt im Gesamtprozess bevorzugt nur einmal zum Einsatz und dient als Grundlage für die Anwendung der Verfahrensschritte E2, E3 und E4.

Das Reinigen E1 ist bevorzugt ein zerstörungsfreies Wartungsverfahren zur Reinigung des Kraftstoffsystems E0.2 und bevorzugt auch des Verbrennungssystems E0.3 der Verbrennungskraftmaschine E0, bevorzugt eines Fahrzeugs oder eines Energieerzeugungsaggregates, das dadurch weitgehend ohne mechanische Instandsetzung auskommt. Bei Einsatz eines entsprechenden Reinigungsmittels ist es möglich, das Kraftstoffsystem E0.2, die Kraftstoffeinspritzung und die Verbrennungsräume des Verbrennungssystems E0.3 von losen Verschmutzungen und festen Ablagerungen, welche sich über einen langen Zeitraum angelagert haben, wirksam zu reinigen. Die Leistung der Verbrennungskraftmaschine E0 wird verbessert, indem die Grenzflächenreibung zwischen den bewegten gereinigten Komponenten reduziert und eine effektivere und saubere Verbrennung ermöglicht wird.

Der Verfahrensschritt E2 eines Kraftstoffkonditionierens ist ein kontinuierlich und vorrangig durch den Betreiber der Verbrennungskraftmaschine E0, zum Beispiel eines Kraftfahrzeugmotors anzuwendender Verfahrensschritt. Je nach Qualität und Beschaffenheit des eingesetzten Kraftstoffs kommt ein Kraftstoffkonditionierer mit einer festgelegten Konzentration zum Einsatz. Die zusätzlich zum Kraftstoff zugegebenen Wirkstoffe verändern dabei bevorzugt nicht die gesetzlich vorgegebenen Kraftstoffnormen. Der Kraftstoff wird als Trägermedium verwendet, so dass die Wirkstoffe des Kraftstoffkonditionierers im Kraftstoff, im Kraftstoffsystem E0.2 und im Verbrennungssystem E0.3 wirksam werden können.

Der Verfahrensschritt E3 umfasst den Verfahrensschritt von einem Reibungsmindern, der bei dieser Ausführungsform auf das Verbrennungssystem E0.3 und das Getriebe/Differential E0.4 der Verbrennungskraftmaschine E0 einwirkt. Dieser Verfahrensschritt dient zur Reibungsoptimierung im mechanischen Arbeitsprozess der Verbrennungskraftmaschine E0. Das sich im Verbrennungssystem E0.3 oder im Getriebe E0.4 befindende Schmieröl dient in diesem Prozess als Träger der Wirkstoffe des Reibungsminderers zu den mechanischen Reibungszentren der Verbrennungskraftmaschine E0. Dieser Verfahrensschritt ist quasi kontinuierlich und kann in entsprechenden Zeitabständen wiederholt werden. Der zeitliche Abstand der Nachfolgeanwendungen richtet sich nach der von der Verbrennungskraftmaschine E0 und dem Getriebe/Differential E0.4 zu erbringenden und in Kilometern oder Betriebsstunden angebbaren Leistung. Im Falle einer Verbrennungskraftmaschine E0 für ein Kraftfahrzeug kann ein Intervall zwischen den Anwendungen von 200.000 Fahrtkilometern ermöglicht werden.

Ferner erfolgt in einem Verfahrensschritt E4 ein Gaseinspeisen in die Verbrennungskraftmaschinenzuluft, insbesondere in die Ansaugluft des Verbrennungssystems E0.3 der Verbrennungskraftmaschine E0 mittels eines Gaseinspeisungssystems DG. In diesem Ausführungsbeispiel erfolgt zusätzlich als Verfahrensschritt E5 ein Gaseinspeisen von einem Gas, bevorzugt Wasserstoff in das Abgassystem E0.5 der Verbrennungskraftmaschine E0 mittels eines Gaseinspeisungssystems A. Bevorzugt erst nach erfolgreicher Anwendung des Verfahrensschrittes E1 des Reinigens wird das Gaseinspeisen an der Verbrennungskraftmaschine E0 angewendet. Dies ist bevorzugt ein kontinuierlicher und eigenständig arbeitender Prozess, welcher in Abhängigkeit von den Betriebsparametern des Verbrennungssystems E0.3 betrieben wird.

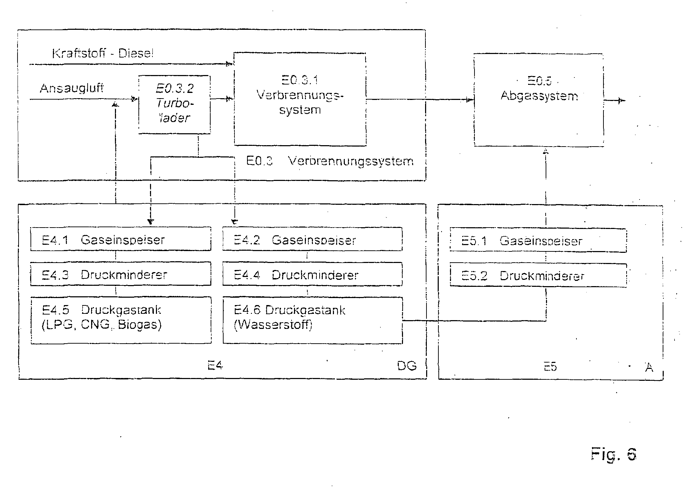

Im Verfahrensschritt E4 dem Gaseinspeisen in die Verbrennungskraftmaschinenzuluft werden dem Verbrennungsprozess der Verbrennungskraftmaschine E0 zusätzliche Brenngase bzw. Reaktionsgase wie z.B. CNG, LPG, Biogas oder Wasserstoff einzeln oder gemischt als MGI-Gas zugeführt. Die Gaszuführung erfolgt unabhängig von der eingesetzten Kraftstoffart (flüssig, gasförmig, fossil, biogen) der Verbrennungskraftmaschine im Mono-Kraftstoffbetrieb (ohne Gaseinspeisung in die Verbrennungskraftmaschinenzuluft). Die Art der Zusammensetzung des MGI-Gases richtet sich nach dem Kraftstofftyp, mit welchem die Verbrennungskraftmaschine E0 im Mono-Kraftstoffbetrieb betrieben wird (vgl. Fig. 6).

Der Verfahrensschritt E5 stellt den Verfahrensschritt von einem Einspeisen von Gas in das Abgassystem E0.5 der Verbrennungskraftmaschine E0 mittels eines Gaseinspeisungssystems A dar. Bevorzugt je nach produzierter Menge an Stickoxidemissionen des Verbrennungssystems E0.3 wird Wasserstoff mengenproportional in das Abgas der Verbrennungskraftmaschine E0 vor dem Katalysator eingebracht. Durch eine chemische Reaktion werden die Stickoxide in elementaren Stickstoff umgesetzt, wodurch die Emissionen der Verbrennungskraftmaschine E0 gesenkt werden.

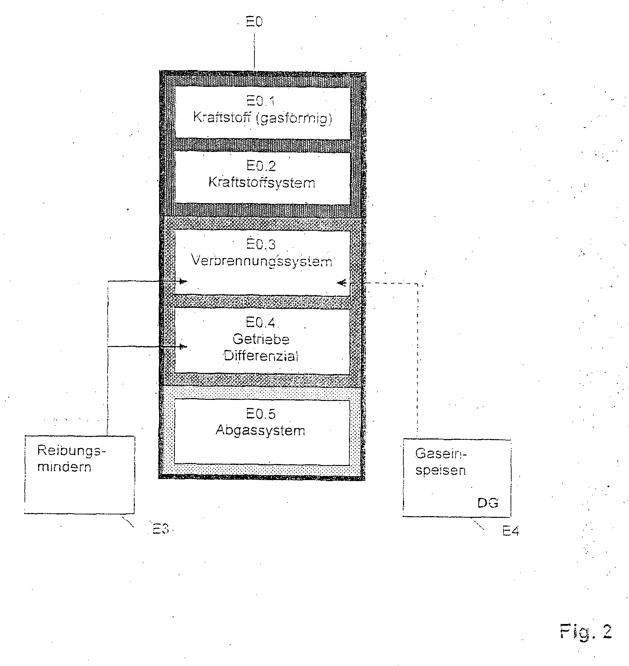

Fig. 2 ist eine schematische Darstellung der technologischen Funktionalität des erfindungsgemäßen Verfahrens bei Verbrennungskraftmaschinen E0, die mit gasförmigem Kraftstoff betrieben werden. Es ist hier insbesondere dargestellt, wie die einzelnen Verfahrensschritte E3 und E4 auf die vereinfacht dargestellte Verbrennungskraftmaschine E0 einwirken. Bei dieser Betriebsvariante des erfindungsgemäßen Verfahrens für Verbrennungskraftmaschinen E0, welche mit einem gasförmigen Kraftstoff betrieben werden, entfallen bevorzugt die erfindungsgemäßen Verfahrensschritte E1 und E2.

Die Anwendung des Verfahrensschritts E3 von einem Reibungsmindern erfolgt wie mit Bezug auf Fig. 1 bereits beschrieben und ist nicht von der Kraftstoffart im Kraftstoffmonobetrieb oder Kraftstoffmischbetrieb abhängig.

Das Gaseinspeisen E4 wird hingegen, abhängig vom gasförmigen Kraftstoff, anders als bei einer Verbrennungskraftmaschine mit flüssigem Kraftstoff durchgeführt. Je nach Zusammensetzung des gasförmigen Kraftstoffs wird gemäß diesem Ausführungsbeispiel ein definierter Anteil an gasförmigem Wasserstoff bevorzugt in das Ansaugrohr der Verbrennungskraftmaschine E0 mittels des Gaseinspeisungssystem DG eingespeist. Dadurch wird der Verbrennungsprozess optimiert und es kommt zu einer Emissionsminderung bei gleichbleibender Leistung der Verbrennungskraftmaschine E0.

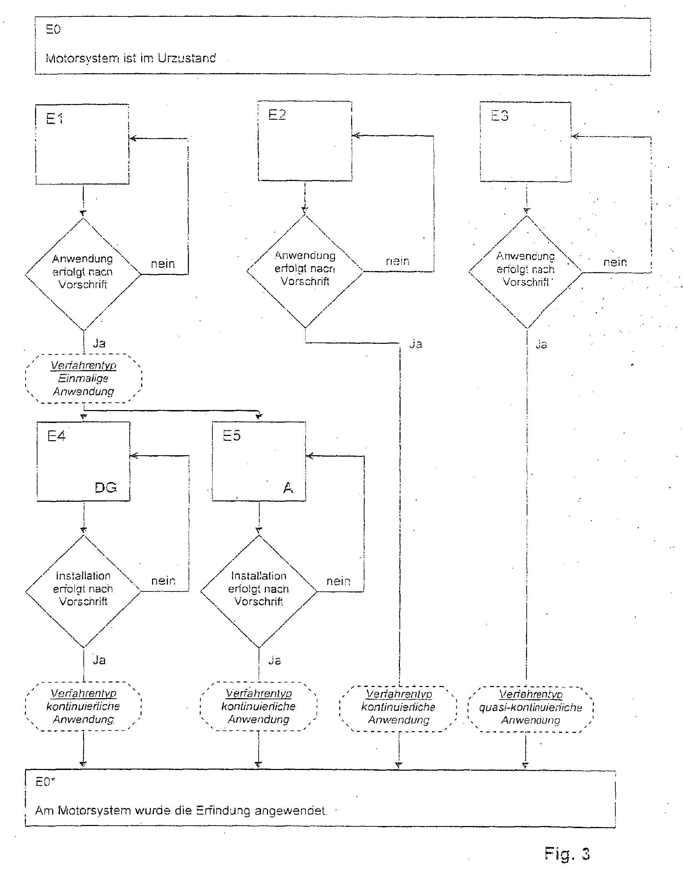

Fig. 3 ist ein Ablaufschema des erfindungsgemäßen Verfahrens bei Verbrennungskraftmaschinen E0, die mit flüssigem Kraftstoff betrieben werden. Die Verfahrensschritte sind jeweils durch eben angeordnete Rechtecke symbolisiert. Durch schräg gestellte Rechtecke sind Verzweigungen dargestellt, die den Übergang von einem Verfahrensschritt zu einem nächsten Verfahrensschritt jeweils in Abhängigkeit von einer Übergangsbedingung bestimmen. Ist beispielsweise der Verfahrensschritt E1 als einmalige Anwendung nicht abgeschlossen, so wird er wiederholt. Erst mit entsprechenden Ausgangsparametern des Verfahrensschrittes E1, findet ein Übergang zum Verfahrensschritt E4 statt. Insgesamt wird so der logische Ablauf dargestellt, wie der Motor E0 aus dem oben als Rechteck dargestellten Urzustand in den unten mit E0* angegebenen Zustand bei erfolgreicher Anwendung der vorliegenden Erfindung überführt wird.

Aus Fig. 3 wird deutlich, dass das Gaseinspeisen E4 in das Verbrennungssystem E0.3 der Verbrennungskraftmaschine E0 zeitlich nach der erfolgreichen Durchführung des Reinigungsschrittes E1 durchgeführt wird. Die Durchführung des Verfahrensschritts einer Kraftstoffkonditionierung E2 und des Verfahrensschrittes E3 von einem Reibungsmindern erfolgen unabhängig voneinander. Die Anwendung des Grundablaufs des erfindungsgemäßen Verfahrens ist nach Durchführung der erfindungsgemäßen Verfahrensschritte E1, E2, E3 und E4 bei Verbrennungskraftmaschinen, die mit flüssigem Kraftstoff betrieben werden, abgeschlossen. Optional kann der Verfahrensschritt E5 noch zusätzlich, nach der erfolgreichen Durchführung des Verfahrensschritts E1 durchgeführt werden.

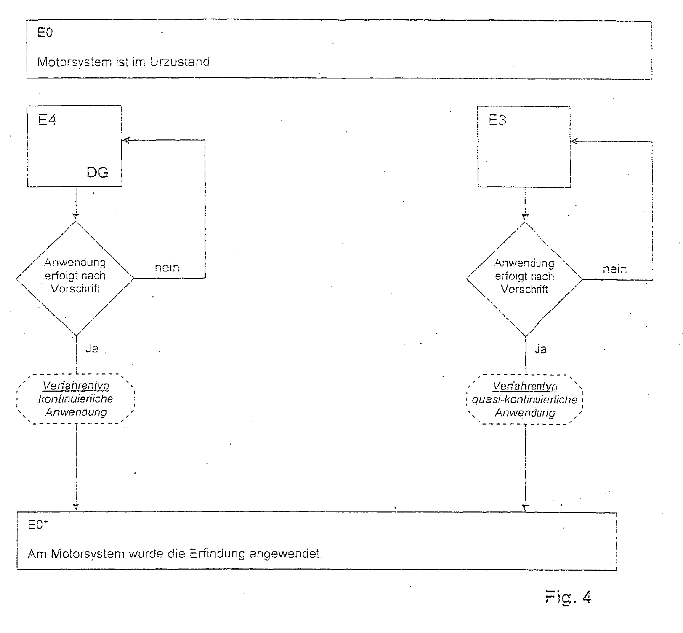

Fig. 4 zeigt ein Ablaufschema des erfindungsgemäßen Verfahrens bei Verbrennungskraftmaschinen E0, die mit gasförmigem Kraftstoff betrieben werden analog der Darstellung von Fig. 3. Aus Fig. 4 wird ersichtlich, dass die Durchführung des Verfahrensschrittes des Gaseinspeisens E4 parallel zum Verfahrensschritt des Reibungsminderns E3 erfolgt, wobei E3 einen quasikontinuierlichen Verfahrensschritt und E4 einen kontinuierlichen Verfahrensschritt darstellt. Die Verfahrensschritte E1 und E2 sind technisch in dieser Betriebsvariante (Verwendung eines gasförmigen Kraftstoffs) bevorzugt nicht anwendbar. Die Durchführung des erfindungsgemäßen Verfahrens ist dann bei Durchführung der Verfahrensschritte E3 und E4 abgeschlossen.

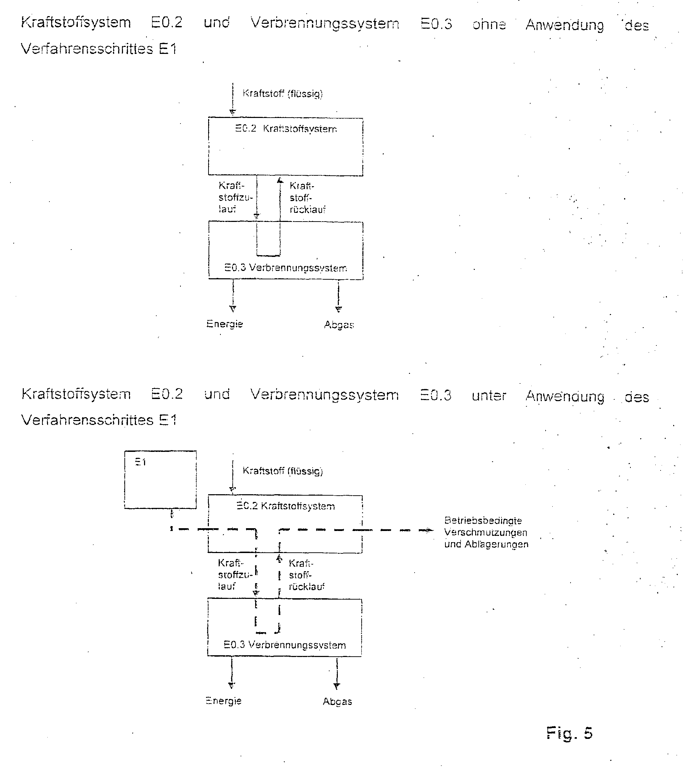

Fig. 5 ist eine schematische Darstellung der Kraftstoffversorgung einer Verbrennungskraftmaschine E0, die mit flüssigem Kraftstoff betrieben wird, im Bild oben ohne und im Bild unten mit Anwendung des erfindungsgemäßen Verfahrensschritts E1 des Reinigens. Der Verfahrensschritt E1 bildet die Grundlage für die weitere Durchführung der Verfahrensschritte E4 und E5 bei Verwendung von flüssigem Kraftstoff.

Der Verfahrensschritt E1 des Reinigens wird durch zwei Verfahrensbestandteile geprägt. Ein Verfahrensbestandteil sind die Verfahrensparameter, wie zum Beispiel die Reinigungsdauer, der andere Verfahrensbestandteil wird durch die chemische Zusammensetzung und Konzentration des Reinigungsmittels bestimmt. Je nach Verschmutzungsgrad, welcher zum Beispiel anhand des Belastungsgrades des Kraftstofffilters feststellbar ist und der insbesondere von der Einsatzbelastung der Verbrennungskraftmaschine und der Qualität des verwendeten Kraftstoffs abhängig ist, wird die Dauer des Reinigungszyklus festgelegt. Die bevorzugte Dauer für einen Reinigungszyklus liegt bei etwa 40 bis 60 Minuten. Die Einsatzmenge des Reinigungsmittels richtet sich insbesondere nach der Größe und Struktur des Kraftstoffsystems E0.2 und nach dem Verbrauch der Verbrennungskraftmaschine E0 im Mono-Kraftstoffbetrieb.

Zum Einspeisen des Reinigungsmittels wird ein Reinigungsmitteleinspeiser an das Kraftstoffsystem E0.2 der Verbrennungskraftmaschine E0 angeschlossen. Der Kraftstofftank ist dabei abgekoppelt und die Verbrennungskraftmaschine E0 erhält den notwendigen Kraftstoff aus der Kraftstoffvorlage des Reinigungsmitteleinspeisers. Betriebsbedingte Verschmutzungen und Ablagerungen werden aus dem Verbrennungssystem E0.3 entfernt. Nachfolgend wird eine Dichtigkeitskontrolle des Kraftstoffsystems E0.2 durchgeführt. Danach startet der Reinigungsprozess vollautomatisch. Nach Ablauf des Verfahrensschrittes E1 von einem Reinigen wird das gesamte Kraftstoffsystem E0.2 von den Resten des Reinigungsmittels gereinigt, indem das Kraftstoffsystem E0.2 mit frischem Kraftstoff gespült wird. Nachfolgend wird der Reinigungsmitteleinspeiser vom Kraftstoffsystem E0.2 getrennt. Anschließend werden sämtliche Kraftstofffilter ausgewechselt.

Fig. 6 zeigt eine schematische Darstellung des Verfahrensschrittes E4 von einem Gaseinspeisen in das Verbrennungssystem E0.3 mittels des Gaseinspeisers DG und von dem Verfahrensschritt E5 einem Gaseinspeisen in das Abgassystem E0.5 der Verbrennungskraftmaschine E0 mittels des Gaseinspeisers A bei Verwendung von flüssigem Kraftstoff. Die Anwendungsform des Gaseinspeisungssystems DG richtet sich nach dem Basiskraftstoff der Verbrennungskraftmaschine E0. In Fig. 6 sind die technologischen Systemanwendungen für eine mit Diesel betriebene Verbrennungskraftmaschine E0 dargestellt. Es ist schematisch der Kraftstoffmischbetrieb dargestellt, in dem Dieselöl als Hauptkraftstoff und Gas als Sekundärkraftstoff gleichzeitig in den Verbrennungsprozess eingeführt werden.

Die Zusammensetzung des zugeführten Gases, wird auf die Anforderungen der Verbrennungskraftmaschine E0 abgestimmt. Das Gas wird hierbei aus einem bestimmten Anteil an Brenngas (zum Beispiel LPG, CNG, Biogas) und einem Anteil an gasförmigem Wasserstoff zusammengemischt. Aus einem Druckgastank E4.5 für LPG, CNG, Biogas oder einer Mischung davon wird mittels des Gaseinspeisungssystems DG Gas über einen Druckminderer E4.3 zur Gasdruckeinstellüng und schließlich den Gaseinspeiser E4.1 der Ansaugluft dem Verbrennungssystem E0.3 der Verbrennungskraftmaschine E0 zugeführt. Ferner wird aus einem Druckgastank E4.6 Wasserstoff über einen Druckminderer E4.4 für die Druckeinstellung und einen Gaseinspeiser E4.2 dem Verbrennungssystem E0.3 zugeführt. Das Verbrennungssystem weist bei diesem Ausführungsbeispiel einen Turbolader E0.3.2 auf, in dessen Ansaugluft das Gas eingespeist wird. Ferner wird bei diesem Ausführungsbeispiel, wie im Bild rechts dargestellt ist, mittels des Gaseinspeisungssystems A Wasserstoff aus dem Druckgastank E4.6 über einen Druckminderer E5.2 für die Druckeinstellung und einen Gaseinspeiser E5.1 in das Abgassystem E0.5 der Verbrennungskraftmaschine E0 eingespeist.

Der Anteil an Brenngas wird auf Basis des Kraftstoffbedarfes im Kraftstoffmonobetrieb (keine Gaseinspeisung) in der vorrangigen Betriebslaststufe festgelegt. Der Anteil an zuzuführendem gasförmigem Wasserstoff richtet sich nach der chemischen Zusammensetzung des Kraftstoffgemisches. Aus diesen Parametern ergibt sich das MGI-Gas (LPG, CNG, Biogas oder einer Mischung davon).

Das MGI-Gas wird bevorzugt mit geringem Überdruck in das Ansaugrohr des Motors eingeblasen, so dass es sich bevorzugt noch vor dem Eintritt in den Verbrennungsraum mit der gegebenenfalls durch einen Turbolader verdichteten angesaugten Luft vermischt. Dieses Gemisch wird nach dem Einlass in den Verbrennungsraum durch die selbsttätige Zündung des Dieselöls mitgezündet. Ein hoher Luftüberschuss stellt sicher, dass keine Rückzündung erfolgt und die Verbrennungstemperatur niedrig gehalten wird, was zu geringen Stickoxidemissionen und verminderten thermischen Verlusten führt.

In der mit Dieselöl betriebenen konventionellen Verbrennungskraftmaschine werden beim Kraftstoffmonobetrieb effektiv ungefähr 85 % vom eingespritzten Dieselkraftstoff verwendet. Der Rest verschwindet ungenutzt durch die Abgasanlage und gelangt in die Umwelt. Im Kraftstoffmischbetrieb mit Diesel/MGI-Gas werden die physikalischen und chemischen Parameter der Kraftstoffe effizienter genutzt. Das Dieselöl wird durch das Einspritzsystem in die Verbrennungskammer eingedüst. Nach der Selbstentzündung verbrennt der Kraftstoff von außen nach innen. Es bleibt ein ungenutzter Rest an Dieselkraftstoff zurück. Brenngase, wie zum Beispiel LPG, CNG oder Biogas verbrennen langsamer als Dieselöl. Das führt dazu, dass das Dieselöl durch die verzögerte Verbrennung vollständiger umgesetzt wird. Ferner verbrennt Wasserstoff schneller als Dieselöl und Brenngas, was sich wiederum in dem hier vorliegenden Verbrennungsprozess positiv auf die chemische Umsetzung des Dieselkraftstoffes auswirkt. Damit ist es möglich, den flüssigen Treibstoff (Diesel) mit 95 prozentigem Stoffumsatz deutlich weitergehender zu verbrennen und effizienter auszunutzen. Zudem dient das eingesetzte Brenngas auch als eigener Treibstoff, da es eigene Verbrennungsenergie in den Verbrennungsprozess einbringt.

In der Stoff-/und Energiebilanz des Motors ist dadurch bei zusätzlicher Verwendung von MGI-Gas für die Erzeugung der gleichen Leistung weniger Dieselkraftstoff erforderlich. Ferner werden die Abgasemissionen gesenkt. Der Betrieb der Verbrennungskraftmaschine wird durch das kostengünstige MGI-Gas wirtschaftlicher.

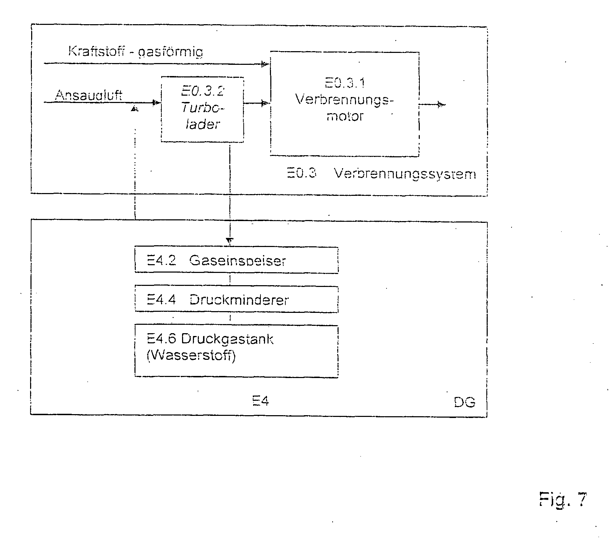

Fig. 7 ist eine schematische Darstellung des Verfahrensschrittes E4 einer Gaseinspeisung in das Verbrennungssystem E0.3 der Verbrennungskraftmaschine E0 bei Verwendung von gasförmigem Kraftstoff. Die Anwendungsform des Gaseinspeisungssystems DG richtet sich nach dem Basiskraftstoff der Verbrennungskraftmaschine. Für ein mit gasförmigem Basiskraftstoff betriebenes Aggregat ergibt sich bevorzugt die in Fig. 7 dargestellte technologische Systemanwendung. Es ist schematisch der Kraftstoffbetrieb dargestellt, in dem Gas (LPG, CNG, Biogas oder eine Mischung davon) als Hauptkraftstoff dem Verbrennungsmotor E0.3.1 des Verbrennungssystems E0.3 der Verbrennungskraftmaschine E0 zugeführt wird. Zusätzlich wird gasförmiger Kraftstoff, in diesem Ausführungsbeispiel Wasserstoff aus einem Druckgastank E4.6 über einen Druckminderer E4.4 und einen Gaseinspeiser E4.2 in die Ansaugluft des Turboladers E0.3.2 des Verbrennungssystems E0.3 eingeführt. Die Anwendungsmenge des gasförmigen Wasserstoffs ermittelt sich aus dem Gesamtverbrauch der Verbrennungskraftmaschine. In Abgleich mit den Gasemissionen wird die Menge an Wasserstoff für jede Anlage spezifisch eingestellt. Als technologische Zielgröße ist bevorzugt 3 % gasförmiger Wasserstoff zum Gesamtverbrauch der Verbrennungskraftmaschine vorgesehen.

In der Stoff-/und Energiebilanz der Verbrennungskraftmaschine E0 ist dadurch bei zusätzlicher Verwendung von MGI-Gas für die Erzeugung der gleichen Leistung weniger Gas notwendig. Die Abgasemissionen, hier vorrangig Formaldehyd, werden gesenkt. Der Betrieb de Verbrennungskraftmaschine E0 wird bevorzugt durch eine gesetzliche Zusatzvergütung der erzeugten Energie bei Reduzierung von Formaldehyd wirtschaftlicher.

Das erfindungsgemäße Verfahren ermöglicht es, die Schadstoffparameter Russ bzw. Staub und/oder Feinstaub und die Stickoxide im Abgas von Verbrennungskraftmaschinen E0, die mit flüssigen Kraftstoffen betrieben werden, zu senken. Ferner wird der Formaldehydanteil im Abgas von Verbrennungskraftmaschinen E0, die mit gasförmigen Kraftstoffen betrieben werden, reduziert.

Das erfindungsgemäße Verfahren zur Emissionsminderung von Verbrennungskraftmaschinen E0 ist ein komplexes in allen gängigen Verbrennungskraftmaschinen E0 einsetzbares Verfahren. Die primäre Wirkung des erfindungsgemäßen Verfahrens liegt in der dauerhaften Reduktion der Abgasemissionen. Als zweite vorteilhafte Wirkung wird die Verbrennungskraftmaschine E0 gegen mechanischen Verschleiß im Kraftstoff- und Tanksystem und vor allem in den ölführenden Systemen (Verbrennungssystem E0.3, Getriebe/Differential E0.4) permanent geschützt.

Je nach Basiskraftstoff (flüssig, gasförmig) wird das Verfahren auf die spezifischen Betriebsbedingungen eingestellt, so dass eine optimale Emissionsreduzierung erfolgen kann. Durch die gezielte Kombination der einzelnen ineinandergreifenden Verfahrensschritte ergibt sich ein Synergieeffekt, welcher für den Anwender neben den vorteilhaften Wirkungen für den Schutz der Umwelt auch wirtschaftlich sinnvoll ist.

## Patentansprüche

1. Verfahren zur Emissionsminderung von Verbrennungskraftmaschinen (E0), die mit flüssigem Kraftstoff betrieben sind, mit folgenden Verfahrensschritten:
(E1) Reinigen des Kraftstoffsystems unter Zuführung einer Reinigungsflüssigkeit
(E2) Kraftstoffkonditionieren durch Zugabe eines Kraftstoffkonditionierers
(E3) Reibungsmindern durch Zugabe eines Reibungsminderers zu dem Verbrennungskraftmaschinenöl
(E4) Gaseinspeisen in das Verbrennungssystem (E0.3) der Verbrennungskraftmaschine (E0), wobei zusätzlich zum Kraftstoff LPG, CNG, Biogas, Wasserstoff oder einer Kombination davon der Verbrennungskraftmaschine (E0) zur Verbrennung zugeführt wird.

2. Verfahren zur Emissionsminderung von Verbrennungskraftmaschinen (E0), die mit gasförmigem Kraftstoff betrieben sind, mit folgenden Verfahrensschritten:
(E3) Reibungsmindern durch Zugabe eines Reibungsminderers zu dem Verbrennungskraftmaschinenöl
(E4) Gaseinspeisen in das Verbrennungssystem (E0.3) der Verbrennungskraftmaschine (E0), wobei zusätzlich zum Kraftstoff LPG, CNG, Biogas, Wasserstoff oder einer Kombination davon der Verbrennungskraftmaschine (E0) zur Verbrennung zugeführt wird.

3. Verfahren nach Anspruch 1, **dadurch gekennzeichnet, dass** im Verfahrensschritt (E1) folgende Teilverfahrensschritte vorgesehen sind:
(A) Durchführen eines Arbeitsprozesses zum zerstörungsfreien vollautomatischen Reinigen der Verbrennungskraftmaschine unter Zuführung einer Reinigungsflüssigkeit in die Verbrennungskraftmaschine (E0);
(B) Wechseln der Kraftstofffilter, die zum Reinigen des Kraftstoffsystems der Verbrennungskraftmaschine (E0) vorgesehen sind.

4. Verfahren nach einem der Ansprüche 1 oder 3, **dadurch gekennzeichnet, dass** das im Verfahrensschritt (E2) das Trägermedium der Wirkstoffe ein fließfähiges Trägermedium der Verbrennungskraftmaschine (E0), insbesondere ein Kraftstoff ist.

5. Verfahren nach einem der vorhergehenden Ansprüche, **dadurch gekennzeichnet, dass** im Verfahrensschritt (E3) das Trägermedium der Wirkstoffe ein fließfähiges Trägermedium der Verbrennungskraftmaschine (E0), insbesondere ein Verbrennungskraftmaschinenschmieröl ist.

6. Verfahren nach einem der vorhergehenden Ansprüche, **dadurch gekennzeichnet, dass** in einem zusätzlichen Verfahrensschritt (E5) ein Gas, insbesondere Wasserstoff oder ein Gasgemisch in ein Abgassystem (E0.5) der Verbrennungskraftmaschine (E0) eingebracht wird.

7. Verfahren nach Anspruch 5 oder 6 **dadurch gekennzeichnet, dass** im Verfahrensschritt (E4) das Einspeisen von Gas in das Verbrennungssystem (E0.3) der Verbrennungskraftmaschine (E0) und/oder im Verfahrensschritt (E5) das Gaseinspeisen in das Abgassystem (E0.5) mengenmäßig in Abhängigkeit von wenigstens einem Emissionswert, insbesondere einem Stickstoffoxydgehaltwert, Feinstaubgehaltwert, Formaldehydgehaltwert, Kohlenstoffdioxidgehaltwert, Kohlenstoffmonoxidgehaltwert oder einer Kombination davon des Abgases der Verbrennungskraftmaschine (E0) im Abgassystem (E0.5) gesteuert wird.

8. Verbrennungskraftmaschine (E0) zum Ausführen eines Verfahrens nach einem der Ansprüche 6 oder 7 mit einem Verbrennungssystem (E0.3) und einem Kraftstoffsystem (E0.2) zum Speichern von Kraftstoff und zum Zuführen von Kraftstoff zum Verbrennungssystem (E0.3), einem Abgassystem (E0.5), einem Gaseinspeisungssystem (DG), das eingerichtet ist, Gas in das Verbrennungssystem (E0.3) der Verbrennungskraftmaschine (E0) einzuspeisen und einem Gaseinspeisungssystem (A), das eingerichtet ist, Gas in das Abgassystem (E0.5) der Verbrennungskraftmaschine (E0) einzuspeisen.

9. Verbrennungskraftmaschine (E0) nach Anspruch 8, **dadurch gekennzeichnet, dass** das Gaseinspeisungssystem (DG) zum Einspeisen von Gas in das Verbrennungssystem (E0.3) der Verbrennungskraftmaschine (E0) und/oder das Gaseinspeisungssystem (A) zum Gaseinspeisen in das Abgassystem (E0.5) der Verbrennungskraftmaschine (E0) eingerichtet sind das Gaseinspeisen in das Verbrennungssystem (E0.3) der Verbrennungskraftmaschine (E0) bzw. das Gaseinspeisen in das Abgassystem (E0.5) der Verbrennungskraftmaschine (E0) mengenmäßig in Abhängigkeit von wenigstens einem Emissionswert, insbesondere einem Stickstoffoxydgehaltwert, Feinstaubgehaltwert, Formaldehydgehaltwert, Kohlenstoffdioxidgehaltwert, Kohlenstoffmonoxidgehaltwert oder einer Kombination davon des Abgases der Verbrennungskraftmaschine (E0) im Abgassystem (E0.5) durchzuführen.

10. Verbrennungskraftmaschine (E0) nach Anspruch 9 oder 10, **dadurch gekennzeichnet, dass** die Gaseinspeisungssysteme (A, DG) mit unterschiedlichen Gasen bzw. Gaszusammensetzungen befüllt sind.

## Claims

1. Method for emission reduction of internal combustion engines (EO) which are operated using liquid fuel, having the following method steps:
(E1) cleaning the fuel system while supplying a cleaning liquid
(E2) fuel conditioning by addition of a fuel conditioner
(E3) friction reduction by addition of a friction reducer to the internal combustion engine oil
(E4) feeding gas into the combustion system (EO.3) of the internal combustion engine (EO), wherein in addition to the fuel, LPG, CNG, biogas, hydrogen or a combination thereof is supplied to the internal combustion engine (EO) for combustion.

2. Method for emission reduction of internal combustion engines (EO) which are operated using gaseous fuel, having the following method steps:
(E3) friction reduction by addition of a friction reducer to the internal combustion engine oil
(E4) feeding gas into the combustion system (EO.3) of the internal combustion engine (EO), wherein in addition to the fuel, LPG, CNG, biogas, hydrogen or a combination thereof is supplied to the internal combustion engine (EO) for combustion.

3. Method according to claim 1, **characterised in that** in method step (E1), the following part method steps are provided:
(A) carrying out a work process for non-destructive fully automatic cleaning of the internal combustion engine while supplying a cleaning liquid to the internal combustion engine (EO);
(B) changing the fuel filters which are provided for cleaning the fuel system of the internal combustion engine (EO).

4. Method according to one of claims 1 or 3, **characterised in that** in method step (E2), the carrier medium of the active substances is a flowable carrier medium of the internal combustion engine (EO), in particular a fuel.

5. Method according to one of the preceding claims, **characterised in that** in method step (E3), the carrier medium of the active substances is a flowable carrier medium of the internal combustion engine (EO), in particular an internal combustion engine lubricating oil.

6. Method according to one of the preceding claims, **characterised in that** in an additional method step (E5), a gas, in particular hydrogen or a gas mixture, is introduced into an exhaust gas system (EO.5) of the internal combustion engine (EO).

7. Method according to claim 5 or 6, **characterised in that** in method step (E4), the feeding of gas into the combustion system (EO.3) of the internal combustion engine (EO) and/or in method step (E5), the feeding of gas into the exhaust gas system (EO.5) is controlled in terms of quantity as a function of at least one emission value, in particular a nitrogen oxide content value, fine dust content value, formaldehyde content value, carbon dioxide content value, carbon monoxide content value or a combination thereof of the exhaust gas of the internal combustion engine (EO) in the exhaust gas system (EO.5).

8. Internal combustion engine (EO) for executing a method according to one of claims 6 or 7 using a combustion system (EO.3) and a fuel system (EO.2) for storing fuel and for supplying fuel to the combustion system (EO.3), an exhaust gas system (EO.5), a gas-feeding system (DG), which is equipped to feed gas into the combustion system (EO.3) of the internal combustion engine (EO) and a gas-feeding system (A) which is equipped to feed gas into the exhaust gas system (EO.5) of the internal combustion engine (EO).

9. Internal combustion engine (EO) according to claim 8, **characterised in that** the gas-feeding system (DG) for feeding gas into the combustion system (EO.3) of the internal combustion engine (EO) and/or the gas-feeding system (A) for feeding gas into the exhaust gas system (EO.5) of the internal combustion engine (EO) are equipped to carry out feeding of gas into the combustion system (EO.3) of the internal combustion engine (EO) or feeding of gas into the exhaust gas system (EO.5) of the internal combustion engine (EO) in terms of quantity as a function of at least one emission value, in particular a nitrogen oxide content value, fine dust content value, formaldehyde content value, carbon dioxide content value, carbon monoxide content value or a combination thereof of the exhaust gas of the internal combustion engine (EO) in the exhaust gas system (EO.5).

10. Internal combustion engine (EO) according to claim 9 or 10, **characterised in that** the gas-feeding systems (A, DG) are filled with different gases or gas compositions.

## Revendications

1. Procédé de réduction des émissions de moteurs à combustion interne (E0) fonctionnant avec un carburant liquide, comprenant les étapes suivantes :
(E1) nettoyage du système de carburant par conduction d'un liquide de nettoyage
(E2) conditionnement du carburant par ajout d'un agent conditionneur de carburant
(E3) réduction des frictions par ajout d'un agent réducteur de frottement à l'huile pour moteur à combustion interne
(E4) alimentation en gaz du système de combustion (E0.3) du moteur à combustion interne (E0), du GPL, du CNG, du biogaz, de l'hydrogène ou une combinaison de ceux-ci alimentant le moteur à combustion interne (E0) en plus du carburant pour combustion.

2. Procédé de réduction des émissions de moteurs à combustion interne (E0) fonctionnant avec un carburant gazeux, comprenant les étapes suivantes :
(E3) réduction des frictions par ajout d'un agent réducteur de frottement à l'huile pour moteur à combustion interne
(E4) alimentation en gaz du système de combustion (E0.3) du moteur à combustion interne (E0), du GPL, du CNG, du biogaz, de l'hydrogène ou une combinaison de ceux-ci alimentant le moteur à combustion interne (E0) en plus du carburant pour combustion.

3. Procédé selon la revendication 1, **caractérisé en ce que** les étapes partielles suivantes sont prévues en étape (E1) :
(A) exécution d'un processus de travail pour le nettoyage entièrement automatique et non destructif du moteur à combustion interne par conduction d'un liquide de nettoyage vers le moteur à combustion interne (E0) ;
(B) changement des filtres à carburant prévus pour le nettoyage du système de carburant du moteur à combustion interne (E0).

4. Procédé selon la revendication 1 ou 3, **caractérisé en ce qu'**en étape (E2), le véhicule des agents actifs est un véhicule fluide du moteur à combustion interne (E0), en particulier un carburant.

5. Procédé selon l'une des revendications précédentes, **caractérisé en ce qu'**en étape (E3), le véhicule des agents actifs est un véhicule fluide du moteur à combustion interne (E0), en particulier une huile lubrifiante pour moteur à combustion interne.

6. Procédé selon l'une des revendications précédentes, caractérisé en ce en ce que lors d'une étape supplémentaire (E5) un gaz, en particulier de l'hydrogène ou un mélange gazeux, est introduit dans un système d'échappement (E0.5) du moteur à combustion interne (E0).

7. Procédé selon la revendication 5 ou 6, **caractérisé en ce qu'**en étape (E4), l'alimentation en débit gazeux du système de combustion (E0.3) du moteur à combustion interne (E0) et/ou en étape (E5) l'alimentation en débit gazeux du système d'échappement (E0.5) sont commandées en fonction d'au moins une valeur d'émission, en particulier d'une valeur de teneur en oxyde d'azote, d'une valeur de teneur en poussières fines, d'une valeur de teneur en formaldéhyde, d'une valeur de teneur en dioxyde de carbone, d'une valeur de teneur en monoxyde de carbone ou d'une combinaison de celles-ci dans les gaz d'échappement du moteur à combustion interne (E0) dans le système d'échappement (E0.5).

8. Moteur à combustion interne (E0) pour l'exécution d'un procédé selon la revendication 6 ou 7, avec un système de combustion (E0.3) et un système de carburant (E0.2) pour le stockage de carburant et pour la conduction de carburant vers le système de combustion (E0.3), un système d'échappement (E0.5), un système d'alimentation en gaz (DG) prévu pour alimenter en gaz le système de combustion (E0.3) du moteur à combustion interne (E0) et un système d'alimentation en gaz (A) prévu pour alimenter en gaz le système d'échappement (E0.5) du moteur à combustion interne (E0).

9. Moteur à combustion interne (E0) selon la revendication 8, **caractérisé en ce que** le système d'alimentation en gaz (DG) destiné à alimenter en gaz le système de combustion (E0.3) du moteur à combustion interne (E0) et/ou le système d'alimentation en gaz (A) destiné à alimenter en gaz le système d'échappement (E0.5) du moteur à combustion interne (E0) sont prévus pour alimenter en débit gazeux le système de combustion (E0.3) du moteur à combustion interne (E0) ou le système d'échappement (E0.5) du moteur à combustion interne (E0) en fonction d'au moins une valeur d'émission, en particulier d'une valeur de teneur en oxyde d'azote, d'une valeur de teneur en poussières fines, d'une valeur de teneur en formaldéhyde, d'une valeur de teneur en dioxyde de carbone, d'une valeur de teneur en monoxyde de carbone ou d'une combinaison de celles-ci dans les gaz d'échappement du moteur à combustion interne (E0) dans le système d'échappement (E0.5).

10. Moteur à combustion interne (E0) selon la revendication 9 ou 10, **caractérisé en ce que** les systèmes d'alimentation en gaz (A, DG) sont remplis de différents gaz ou compositions gazeuses.
